# FASCICULE DE BREVET EUROPEEN

(11) **EP 2 475 697 B1**
(45) Date de publication et mention de la délivrance du brevet: **30.07.2014**
(21) Numéro de dépôt: 10759983.9
(22) Date de dépôt: 31.08.2010
(51) Int. Cl.: C08G 18/10, C08G 18/28, C08G 65/26, C09D 7/00

(54) **POLYURETHANES ASSOCIATIFS A BASE DE CARDANOL, EPAISSISSANTS ASSOCIATIFS CORRESPONDANTS ET LEURS UTILISATIONS**
AUF CARDANOL BASIERENDE ASSOZIATIVE POLYURETHANE, ZUGEHÖRIGE ASSOZIATIVE VERDICKER UND IHRE VERWENDUNG
ASSOCIATIVE POLYURETHANES BASED ON CARDANOL, CORRESPONDING ASSOCIATIVE THICKENERS AND USES THEREOF

(30) Priorité: 10.09.2009 FR 0956199
(43) Date de publication de la demande: 18.07.2012
(73) Titulaire: COATEX S.A.S., 69730 Genay (FR)
(72) Inventeur: SUAU, Jean-Marc, F-69480 Lucenay (FR); RUHLMANN, Denis, F-69730 Genay (FR)
(74) Mandataire: Fiorucci, Hélène
(86) Numéro de dépôt international: PCT/IB2010/002177
(87) Numéro de publication internationale: WO 2011/030197

(56) Documents cités:
- FR-A1- 2 826 014
- US-A1- 2005 192 423

## Description

La présente invention concerne le secteur des épaississants associatifs, et plus particulièrement des épaississants associatifs de type HEUR (Uréthane oxyde d'Ethylène modifiés Hydrophobiquement ou Hydrophobically modified Ethylene oxyde URethane), utilisés dans des formulations aqueuses. Ces produits sont destinés à être mis en oeuvre dans des formulations aqueuses telles que des peintures.

L'invention ici décrite a pour principal objet de nouveaux épaississants de type HEUR qui mettent en oeuvre un monomère à base de cardanol, matière première bio-ressourcée. On parvient ainsi à mettre au point une nouvelle gamme d'additifs rhéologiques qui permettent d'épaissir efficacement une peinture aqueuse sur une large gamme de gradient de cisaillement, sans altérer sa compatibilité pigmentaire.

Les formulations de peintures aqueuses contenant des charges minérales sont constituées d'une phase aqueuse, d'un ou plusieurs polymères en émulsion dans la phase liquide dénommés liants, de charges et/ou de pigments, d'un agent dispersant et d'adjuvants aussi divers que des tensioactifs, des agents de coalescence, des biocides, des anti-mousses et enfin, d'au moins un agent épaississant.

Ce dernier permet de maîtriser la rhéologie des formulations aqueuses dans lesquelles il est introduit, et notamment des peintures aqueuses, tant au stade de leur fabrication, que pendant leur transport, leur stockage ou au cours de leur mise en oeuvre. La diversité des contraintes pratiques au niveau de chacune de ces étapes renvoie à une multiplicité de comportements rhéologiques différents.

On peut néanmoins résumer le besoin de l'homme du métier à l'obtention d'un effet d'épaississement de la formulation aqueuse, tant pour des raisons de stabilité au cours du temps, que pour une possible application de la peinture sur une surface verticale, l'absence d'éclaboussures au moment de la mise en oeuvre, etc... C'est pourquoi on a désigné les additifs qui contribuent à cette régulation du comportement rhéologique sous le terme d'épaississants.

Parmi ces produits, on distingue les épaississants dits « associatifs » qui sont des polymères hydrosolubles disposant de groupements hydrophobes insolubles. De telles macromolécules ont un caractère associant : une fois introduits dans l'eau, les groupements hydrophobes sont susceptibles de s'assembler sous forme d'agrégats micellaires. Ces agrégats sont reliés entre eux par les parties hydrophiles des polymères : il y a alors formation d'un réseau tridimensionnel qui provoque l'augmentation de la viscosité du milieu.

Le mécanisme de fonctionnement et les caractéristiques des épaississants associatifs sont aujourd'hui bien connus et décrits par exemple dans les documents « Rheology modifiers for water-borne paints » (Surface Coatings Australia, 1985, pp. 6-10) et « Rheological modifiers for water-based paints : the most flexible tools for your formulations » (Eurocoat 97, UATCM, vol. 1, pp 423-442).

Parmi ces épaississants associatifs, on distingue la classe des épaississants associatifs de type HEUR (Uréthane oxyde d'Ethylène modifiés Hydrophobiquement ou Hydrophobically modified Ethylene oxyde URethane selon l'acronyme anglo-saxon approprié). Ils désignent des copolymères résultant de la synthèse entre un composé du type polyalkylène glycol, un polyisocyanate, et un monomère dit « associatif » du type alkyle ou aryle ou aryalkyle constitué d'un groupe terminal hydrophobe.

Ces structures sont bien connue pour développer de fortes viscosités Brookfield™ sous bas gradient de cisaillement (J. of Applied Polymer Science, vol. 58, p 209-230, 1995 ; Polymeric Mat. Sci. and Engineering, vol. 59, p 1033, 1988 ; Polymeric Mat. Sci. and Engineering, vol. 61, p 533, 1989 ; Polymeric Paint Colour Journal, vol. 176, n° 4169, p 459, June 1986). On en trouve de nombreux exemples dans la littérature, dont on discute par la suite le choix du groupe hydrophobe terminal qui conditionne en grande partie les propriétés rhéologiques du polymère final.

Dans le cadre d'une composition cosmétique, le document EP 1 584 331 propose un groupement terminal hydrophobe ayant de 6 à 34 atomes de carbone. Le document EP 0 905 157 décrit des chaînes ramifiées ayant de 2 à 14 atomes de carbone, en vue d'améliorer la transparence des films de peinture réalisés en présence de tels épaississants. Le document WO 02 / 102868 décrit l'utilisation de plurystyrylphénols qui permettent d'améliorer la compatibilité pigmentaire. Pour augmenter spécifiquement la viscosité Brookfield™, le document EP 0 639 595 propose des groupements hydrophobes linéaires ayant de 4 à 36 atomes de carbone.

On sait aujourd'hui que plus le nombre d'atomes de carbone présents sur le ou les chaînes du groupe terminal hydrophobe est important, plus la viscosité augmente, et notamment la viscosité Brookfield™ à bas gradient de cisaillement (voir document WO 02/102868 en page 5). En effet, la taille des groupements hydrophobes va conditionner la taille des agrégats micellaires qu'ils engendrent une fois en solution, ce qui est directement relié à une augmentation de la viscosité, comme le rappelle le document « Rheology modifiers for water-borne paints » (Surface Coatings Australia, 1985, pp. 6-10).

Au regard de l'art antérieur, on peut chiffrer à « au moins 16 », préférentiellement « au moins 20 », le nombre d'atomes de carbone portés par le groupement hydrophobe, en vue d'obtenir un comportement épaississant « efficace ». A cette exigence technique qui date de nombreuses années, est venue s'ajouter une contrainte d'ordre environnemental, plus récemment : c'est celle de disposer de produits à l'origine bio-ressourcée, c'est-à-dire non issus d'une énergie fossile. Cette démarche s'inscrit dans les concepts de chimie verte et de développement durable.

A cet égard, la science n'a malheureusement pas beaucoup progressé et il existe aujourd'hui une forte demande en faveur d'épaississants associatifs de type HEUR, disposant d'un groupement hydrophobe terminal ayant au moins 20 atomes de carbone, et d'origine bio-ressourcée.

Poursuivant ses recherches en ce sens, la Demanderesse est parvenue à mettre au point de nouvelles structures de ce type. Il s'agit de polyuréthanes hydrosolubles, résultant de la condensation :
a) de cardanol oxyalkylé et d'un polyalkylène glycol,
b) et d'au moins un polyisocyanate.

Le cardanol, dont la formule chimique (I) apparaît ci-après et qui contient 21 atomes de carbone, est obtenu à partir de l'acide anacardique, le composant principal de l'huile de noix de cajou. Elle est aujourd'hui utilisée industriellement dans les résines (CN 101319042, KR 100559055), les mousses (US 2006 004115, EP 1 765 901), les dispersants (US 2004 050752) et les détergents (WO 92 / 21741).

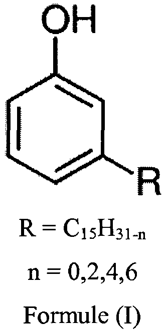

Rien dans l'état de la technique ne suggérait que de telles structures puissent être utilisées pour fabriquer des monomères associatifs, rentrant dans la composition d'épaississants associatifs de type HEUR. On valorise ainsi une matière première non polluante, qui n'est pas issue d'une énergie fossile, et qui est aisément disponible en grande quantité.

De plus, il s'avère que lesdits épaississants conduisent à des comportements rhéologiques particulièrement intéressants, lorsqu'ils sont mis en oeuvre dans des compositions aqueuses. Comme le démontrent les essais qui illustrent la présente invention, on obtient un effet d'épaississement sur un large intervalle de gradient de cisaillement : on est donc capable d'offrir une véritable gamme de produits à l'utilisateur final. Enfin, on ne détériore pas la compatibilité pigmentaire, ce qui est pourtant le cas avec la plupart des épaississants polyuréthanes de l'art antérieur.

On dispose donc au final d'un épaississant de type HEUR particulièrement efficace au sein des compositions aqueuses dans lesquelles il est introduit, et qui dispose d'un monomère terminé par un groupement hydrophobe ayant plus de 20 atomes de carbone, oxyalkylé, ledit groupe hydrophobe étant d'origine bio-ressourcée et non polluante.

Aussi, un premier objet de l'invention consiste en des polyuréthanes hydrosolubles résultant de la condensation :
a) de cardanol oxyalkylé et d'un polyalkylène glycol,
b) et d'au moins un polyisocyanate.

La Demanderesse précise que la fabrication de ces polyuréthanes, qui appartiennent à la famille des épaississants de type HEUR, est parfaitement connue de l'homme du métier, qui pourra se reporter à l'enseignement des documents cités auparavant dans l'arrière plan technologique de la présente invention.

Les polyuréthanes hydrosolubles résultent de la condensation de, exprimé en % en poids de chacun des monomères, la somme de ces % étant égale à 100 % :
a) de 90 % à 99,5 % de cardanol oxyalkylé et d'un polyalkylène glycol,
b) et de 0,5 % à 10 % d'au moins un polyisocyanate.

Ces polyuréthanes sont aussi caractérisés en ce que le polyakylène glycol est préférentiellement le polyéthylène glycol, préférentiellement un polyéthylène glycol de masse moléculaire en poids comprise entre 2 000 g/mole et 20 000 g/mole, préférentiellement entre 8 000 g/mole et 15 000 g/mole, et très préférentiellement entre 8 000 g/mole et 12 000 g/mole.

Ces polyuréthanes sont aussi caractérisés en ce que le polyisocyanate est choisi parmi le 1,4-butane di-isocyanate, le 1,6-hexane diisocyanate, l'isophorone diisocyanate, le 1,3-et le 1,4- cyclohexane diisocyanate, le 4,4'diisocyanatodicyclohexylmethane, le 1-méthyl-2,4-diisocyanatocyclohexane et son mélange avec le 1-méthyl-2,6-diisocyanatocyclohexane, le biuret de l'hexaméthylène diisocyanate, le trimère de l'hexaméthylène diisocyanate, le trimère de l'isophorone diisocyanate et leurs mélanges.

Ces polyuréthanes sont aussi caractérisés en ce que le cardanol est préférentiellement oxyéthylé avec un nombre de motifs d'oxyde d'éthylène compris entre 1 et 100, préférentiellement entre 5 et 60.

Un second objet de la présente invention consiste en l'utilisation desdits polyuréthanes, comme agents épaississants dans une composition aqueuse, ladite composition étant préférentiellement choisie parmi une peinture aqueuse, une laque, un vernis, une sauce de couchage papetière, une formulation cosmétique ou détergente.

Les exemples qui suivent permettent de mieux comprendre l'invention, sans toutefois en limiter la portée.

### EXEMPLES

### Exemple 1

Cet exemple décrit 5 polyuréthanes mettant en oeuvre des cardanols oxyéthylés. Ces polyuréthanes feront l'objet de diverses utilisations dans les exemples suivants.

### Essai n° 1

Cet essai correspond à un polyuréthane, résultant de la condensation de, exprimé en % en poids de chacun des constituants :
a) 84,7 % de polyéthylène glycol de masse moléculaire en poids égale à 10 000 g/mol, 9,6 % de cardanol oxyéthylé avec 6 motifs d'oxyde d'éthylène,
b) 5,7 % d'isophorone diisocyanate.

Ce polyuréthane est formulé dans l'eau en présence d'un tensioactif vendu sous le nom de Simulsol™ Ox1008 par la société SEPPIC™ (ratio en poids : 30 % PU, 20 % Simulsol™ OX1008, 50 % eau).

### Essai n° 2

Cet essai correspond à un polyuréthane, résultant de la condensation de, exprimé en % en poids de chacun des constituants :
a) 85,3 % de polyéthylène glycol de masse moléculaire en poids égale à 10 000 g/mol, 7,9 % de cardanol oxyéthylé avec 6 motifs d'oxyde d'éthylène,
b) 6,8 % d'isophorone diisocyanate.

Ce polyuréthane est formulé dans l'eau en présence d'un tensioactif vendu sous le nom de Simulsol™ Ox1008 par la société SEPPIC™ (ratio en poids : 30 % PU, 20 % Simulsol™ OX1008, 50 % eau).

### Essai n° 3

Cet essai correspond à un polyuréthane, résultant de la condensation de, exprimé en % en poids de chacun des constituants :
a) 83,8 % de polyéthylène glycol de masse moléculaire en poids égale à 10 000 g/mol, 9.5% de cardanol oxyéthylé avec 6 motifs d'oxyde d'éthylène,
b) 6,7 % d'isophorone diisocyanate.

Ce polyuréthane est formulé dans l'eau en présence d'un tensioactif vendu sous le nom de Simulsol™ Ox1008 par la société SEPPIC™ (ratio en poids : 30 % PU, 20 % Simulsol™ OX1008, 50 % eau).

### Essai n° 4

Cet essai correspond à un polyuréthane, résultant de la condensation de, exprimé en % en poids de chacun des constituants :
a) 80,8 % de polyéthylène glycol de masse moléculaire en poids égale à 10 000 g/mol, 12,7 % de cardanol oxyéthylé avec 6 motifs d'oxyde d'éthylène,
b) 6,5 % d'isophorone diisocyanate

Ce polyuréthane est formulé dans l'eau en présence d'un tensioactif vendu sous le nom de Simulsol™ Ox1008 par la société SEPPIC™ (ratio en poids : 30 % PU, 20 % Simulsol™ OX1008, 50 % eau).

### Exemple 2

Cet exemple illustre l'utilisation de polyuréthanes selon l'invention et l'art antérieur, comme agents épaississants d'une peinture mate sans solvant.

La composition de ladite peinture est indiquée dans le tableau 1, les masses de chaque constituant étant indiquées en grammes. Dans les essais, les bases HEUR sont formulées avec des tensio-actifs, mais peuvent aussi être solubilisés dans des solvants ou mis en oeuvre sous forme de poudres.

Les épaississants ont tous un extrait sec de 30 % en poids de matière active. La peinture est formulée selon les méthodes bien connues de l'homme du métier.

**Tableau 1**

| **Ingrédients de la formulation de peinture aqueuse** | **Masses (g)** |
|---|---|
| Ecodis™ P50 (dispersant COATEX™) | 2,0 |
| Tego 1488™ (anti-mousse TEGO™) | 0,76 |
| Mergal K6N (bactéricide TROY™) | 1,0 |
| TiONa RL68 (TiO₂ MILLENIUM™) | 40,98 |
| Omyacoat™ 850 OG (CaCO₃ OMYA™) | 66,51 |
| Durcal™ 5 (CaCO₃ OMYA™) | 150,02 |
| Mowilith™ LDM 1871 (liant CLARIANTTM) | 75,78 |
| NaOH | 0,82 |
| Polyuréthane testé | 6,18 |
| Eau | 155,95 |
| Total | 500,00 |

On détermine alors les viscosités résultantes à différents gradients de vitesse :
- à faible gradient : viscosité Brookfield™ à 10 et 100 tours / minute, respectivement notée µ _{Bk 10} et µ _{Bk 100} (en mPa.s),
- à moyen gradient : viscosité Stormer, notée µ _{S},
- à haut gradient : viscosité ICI, notée µ _{I},
et ce, aux instants T = 0 et 24 heures.

On rappelle que, dans le domaine des peintures aqueuses, une viscosité élevée à gradient de cisaillement élevé traduit un bon comportement « dynamique » : en pratique, la viscosité de la peinture reste suffisamment importante lors de l'étape d'application sur le support ; les bénéfices peuvent en être un garnissant (c'est-à-dire une épaisseur déposée) plus important et une propension aux éclaboussures réduite.

Parallèlement, une viscosité élevée à un gradient de cisaillement faible ou moyen traduit un bon comportement « statique » : on assure ainsi une bonne stabilité au cours de leur stockage tout en évitant le phénomène de sédimentation et une limitation de la tendance à la coulure sur support vertical.

Les essais A1, A2, A3, A4 mettent respectivement en oeuvre les polyuréthanes 1, 2, 3 et 4 selon l'invention (INV) et l'essai A5 met en oeuvre le Coapur™ 6050 (COATEX™), épaississant de type HEUR. Les résultats apparaissent dans le tableau 2.

**Tableau 2**

| | | essai A1 | essai A2 | essai A3 | essai A4 | essai A5 |
|---|---|---|---|---|---|---|
| | | INV | INV | INV | INV | AA |
| | | | | | | |
| µ_{B10}/µ_{B100} | T=0 | 12 500 / 1 670 | 12 200 / 1 870 | 17 200 / 2 800 | 16 200 / 2 400 | 15 900 / 2 420 |
| µ_{S} | | 81 | 85 | 95 | 95 | 90 |
| µ_{I} | | 0,5 | 0,5 | 0,6 | 0,6 | 0,5 |
| | | | | | | |
| µ_{B10}/µ_{B100} | T = 24 heures | 15 100 / 1 830 | 14 000 / 1 910 | 20 800 / 3 100 | 20 000 / 3 000 | 19 500 / 2 960 |
| µ_{S} | | 82 | 86 | 99 | 99 | 98 |
| µ_{I} | | 0,4 | 0,4 | 0,6 | 0,6 | 0,5 |

Ce tableau démontre que les polyuréthanes selon l'invention permettent d'épaissir efficacement une peinture mate sans solvant, quel que soit le gradient de cisaillement. En outre, le polyuréthane selon l'essai A3 offre des performances supérieures à celles de la référence A5.

Si les viscosités obtenues se situent au niveau de celles mesurées pour la référence, les variations observées en fonction des structures synthétisées démontrent la possibilité de développer une gamme d'épaississants à partir de tels polyuréthanes. Ces derniers constituent donc une alternative efficace en terme de performances et qui présentent l'avantage de disposer d'un groupe hydrophobe d'origine naturelle.

De plus, on a réalisé 2 tests de compatibilité pigmentaire. En pratique, si une peinture présente une compatibilité pigmentaire insuffisante, on observe d'une part une chute de la viscosité et d'autre part une faible force colorante nécessitant une quantité plus importante de colorants pour obtenir un certain niveau de teinte. On obtient alors un film de peinture de teinte trop claire et manquant d'uniformité par rapport à la référence. Ce phénomène peut être mesuré par l'utilisation d'un spectrophotocolorimètre permettant de mesurer les coordonnées tri-chromatiques (Huntsmann : L*,a*,b*) donc la couleur d'un film de peinture sec.

On réalise aussi un « essai de gommage au doigt », connu par l'homme du métier sous le vocable « rub out ». Il consiste à appliquer sans cisaillement, à l'aide d'un filmographe, 150 µm de la formulation de peinture sur une carte de contraste, c'est-à-dire lentement et sans contrainte et à attendre 45 secondes puis à appliquer un cisaillement par frottement, avec le doigt, du film encore visqueux de peinture, pendant 30 secondes en un endroit quelconque. Après séchage du film, la différence colorimétrique entre la zone cisaillée (zone frottée) et la zone non cisaillée (zone du film non frotté) déterminée au moyen d'un spectro-colorimètre Spectro-pen, permet d'évaluer (valeur du ΔE) si la composition de peinture testée présente ou non une bonne compatibilité pigmentaire.

Ces 2 derniers tests sont réalisés sur une formulation de peinture, vieille de 14 jours, dans laquelle on a ajouté 5 % en poids d'un pigment noir qui est le Laconyl™ noir (BASF™).

Les résultats apparaissent dans le tableau 3.

**Tableau 3**

| | | essai A1 | essai A2 | essai A3 | essai A4 | essai A5 |
|---|---|---|---|---|---|---|
| | | INV | INV | INV | INV | AA |
| | | | | | | |
| µ_{B10}/µ_{B100} | T = 14 jours | 17900 / 2080 | 15 800 / 1 940 | 20 500 / 2 880 | 20 200 / 2 680 | 21 800 / 3 300 |
| µ_{S} | | 90 | 90 | 101 | 100 | 103 |
| µ_{I} | | 0,5 | 0,5 | 0,5 | 0,5 | 0,6 |
| | | | | | | |
| | T = 14 jours + pigment noir | 15 900 / 1 760 | 15 300 / 1 700 | 16 500 / 2 030 | 15 500 / 2 000 | 13 500 / 1 600 |
| µ_{S} | | 88 | 87 | 91 | 90 | 85 |
| µ_{I} | | 0,5 | 0,5 | 0,5 | 0,5 | 0,5 |
| | | | | | | |
| ΔE | | 1,5 | 2,2 | 7,0 | 7,0 | 9,4 |
| L* fond noir | | 31,9 | 32,5 | 37,5 | 37,0 | 41,7 |
| L* fond blanc | | 31,5 | 32,7 | 37,5 | 37,1 | 41,8 |

Ces résultats démontrent l'excellente compatibilité pigmentaire apportée par les polyuréthanes selon l'invention, à un niveau encore amélioré par rapport à la référence de l'art antérieur : non seulement les chutes de viscosité sont plus faibles selon l'invention (avant et après introduction du colorant noir) mais les valeurs L* restent aussi plus faibles, ce qui traduit une meilleure force colorante.

### Exemple 3

Cet exemple illustre l'utilisation de polyuréthanes selon l'invention et l'art antérieur, comme agents épaississant d'une peinture mate avec solvant.

La composition de ladite peinture est indiquée dans le tableau 4, les masses de chaque constituant étant indiquée en grammes. Les épaississants ont tous un extrait sec de 30 % en poids de matière active. La peinture est formulée selon les méthodes bien connues de l'homme du métier.

**Tableau 4**

| **Ingrédients de la formulation de peinture aqueuse** | **Masses (g)** |
|---|---|
| Ecodis™ P50 (dispersant COATEX™) | 4,0 |
| ByK™ 34 (anti-mousse BYK™) | 1,0 |
| Mergal K6N (bactéricide TROY™) | 2,0 |
| TiONa™ RL 68 (TiO₂ MILLENIUM™) | 80,13 |
| Omyacoat™ 850 OG (CaCO₃ OMYA™) | 220,03 |
| Durcal™ 2 (CaCO₃ OMYA™) | 300,1 |
| Texanol™ 290 D (agent coalescence EASTMAN CHEMICALS™) | 10,0 |
| Acronal™ 290 D (liant BASF™) | 130,0 |
| NaOH | 5,1 |
| Monoéthylène glycol | 10,21 |
| Polyuréthane testé | 16,5 |
| Eau | 220,93 |
| Total | 1000 |

L'essai B1 met en oeuvre le polyuréthane 1 selon l'invention (INV) et l'essai B5 met en oeuvre le Coapur™ 6050 (COATEX™). Les résultats apparaissent dans le tableau 5.

**Tableau 5**

| | | essai B1 | essai B5 |
|---|---|---|---|
| | | INV | AA |
| µ_{B10} / µ_{B100} | T=0 | 19 700/4 200 | 13 500/4 130 |
| µ_{S} | | 110 | 110 |
| µ_{I} | | 0,8 | 0,8 |
| | | | |
| µ_{B10} / µ_{B100} | T = 24 heures | 19 500/4 280 | 13 300/3 850 |
| µ_{S} | | 113 | 113 |
| µ_{I} | | 0,8 | 0,8 |

Ce tableau démontre que le polyuréthane selon l'invention permet d'épaissir efficacement une peinture mate sans solvant, quel que soit le gradient de cisaillement. A bas gradient de cisaillement (viscosité Brookfïeld™ à 10 tours / minute) on est même systématiquement plus efficace qu'avec l'art antérieur.

Le tableau 6 fait apparaître les résultats des tests de compatibilité pigmentaire, après introduction de 5 % en poids de pigment noir Laconyl™ noir (BASF™) dans la peinture vieillie 1 mois.

**Tableau 6**

| | | essai B1 | essai B5 |
|---|---|---|---|
| | | INV | AA |
| µ_{B10} / µ_{B100} | T=0 après introduction du pigment | 19 500 / 4 300 | 13 100 / 4 460 |
| µ_{S} | | 113 | 114 |
| µ_{I} | | 0,8 | 0,8 |
| | | | |
| µ_{B10} / µ_{B100} | T = 24 heures après introduction du pigment | 14 800 / 3 230 | 12 350 / 4 120 |
| µ_{S} | | 105 | 85 |
| µ_{I} | | 0,8 | 0,6 |
| | | | |
| ΔE | | 9,5 | 9,7 |
| L* fond noir | | 43,0 | 43,4 |
| L* fond blanc | | 42,1 | 43,3 |

Ces résultats confirment la très bonne compatibilité pigmentaire apportée par le polyuréthane selon l'invention. Les chutes de viscosité sont plus faibles selon l'invention (avant et après introduction du colorant noir) et donc les viscosités restent plus élevées.

### Exemple 4

Cet exemple illustre l'utilisation de polyuréthanes selon l'invention et l'art antérieur, comme agents épaississant d'une peinture mate avec solvant.

La composition de ladite peinture est celle donnée dans l'exemple 3. Les épaississants ont tous un extrait sec de 30 % en poids de matière active. La peinture est formulée selon les méthodes bien connues de l'homme du métier.

L'essai C1 illustre l'art antérieur et met en oeuvre le Coapur™ 6050 (COATEX™) correspondant à l'essai B5
Les essais C2 à C7 illustrent l'invention.
L'essai C2 met en oeuvre un polyuréthane, résultant de la condensation de, exprimé en % en poids de chacun des constituants :
a) 85,7 % de polyéthylène glycol de masse moléculaire en poids égale à 10 000 g/mol, 9,6 % de cardanol oxyéthylé avec 6 motifs d'oxyde d'éthylène,
b) 4,7 % de toluène diisocyanate.

L'essai C3 met en oeuvre un polyuréthane, résultant de la condensation de, exprimé en % en poids de chacun des constituants :
a) 85,0 % de polyéthylène glycol de masse moléculaire en poids égale à 8 000 g/mol, 9,0 % de cardanol oxyéthylé avec 6 motifs d'oxyde d'éthylène,
b) 6,0 % d'isophorone diisocyanate.

L'essai C4 met en oeuvre un polyuréthane, résultant de la condensation de, exprimé en % en poids de chacun des constituants :
a) 86,0 % de polyéthylène glycol de masse moléculaire en poids égale à 8 000 g/mol, 9,0 % de cardanol oxyéthylé avec 6 motifs d'oxyde d'éthylène,
b) 5,0 % de toluène diisocyanate.

L'essai C5 met en oeuvre un polyuréthane, résultant de la condensation de, exprimé en % en poids de chacun des constituants :
a) 86,0 % de polyéthylène glycol de masse moléculaire en poids égale à 10 000 g/mol, 8,0 % de cardanol oxyéthylé avec 10 motifs d'oxyde d'éthylène,
b) 5,0 % d'isophorone diisocyanate.

L'essai C6 met en oeuvre un polyuréthane, résultant de la condensation de, exprimé en % en poids de chacun des constituants :
a) 86,0 % de polyéthylène glycol de masse moléculaire en poids égale à 10 000 g/mol, 8,0 % de cardanol oxyéthylé avec 25 motifs d'oxyde d'éthylène,
b) 5,0 % d'isophorone diisocyanate.

L'essai C7 met en oeuvre un polyuréthane, résultant de la condensation de, exprimé en % en poids de chacun des constituants :
a) 86,0 % de polyéthylène glycol de masse moléculaire en poids égale à 10 000 g/mol, 8,0 % de cardanol oxyéthylé avec 50 motifs d'oxyde d'éthylène,
b) 5,0 % d'isophorone diisocyanate.

Tous ces polyuréthanes sont formulés dans l'eau en présence d'un tensioactif vendu sous le nom de Simulsol™ Ox1008 par la société SEPPIC™ (ratio en poids : 30 % PU, 20 % Simulsol™ OX1008, 50 % eau).

Les résultats apparaissent dans le tableau 7.

**Tableau 7**

| | | essai C1 | essai C2 | essai C3 | essai C4 |
|---|---|---|---|---|---|
| | | AA | INV | INV | INV |
| µ_{B10} / µ_{B100} | | 13 500 / 4130 | 19 600 / 4 300 | 19 800 / 4 400 | 19 900 / 4 500 |
| µ_{S} | T = 0 | 110 | 110 | 111 | 111 |
| µ_{I} | | 0,8 | 0,8 | 0,8 | 0,8 |
| | | | | | |
| µ_{B10} / µ_{B100} | | 13 300 / 3 850 | 19500 / 4280 | 19 800 / 4440 | 19 500 / 4 500 |
| µ_{S} | T = 24 h | 113 | 113 | 113 | 113 |
| µ_{I} | | 0,8 | 0,8 | 0,8 | 0,8 |
| | | | | | |

| | | | essai C5 | essai C6 | essai C7 |
|---|---|---|---|---|---|
| | | | INV | INV | INV |
| µ_{B10} / µ_{B100} | | | 17 700 / 4250 | 16 000 / 4150 | 14 200 / 3950 |
| µ_{S} | | T = 0 | 113 | 112 | 112 |
| µ_{I} | | | 0,8 | 0,8 | 0,7 |
| | | | | | |
| µ_{B10} / µ_{B100} | | | 17 500 / 4200 | 15 500 / 4 100 | 13 500 / 3 900 |
| µ_{S} | | T = 24 h | 113 | 111 | 111 |
| µ_{I} | | | 0,8 | 0,8 | 0,7 |

Ce tableau démontre que le polyuréthane selon l'invention permet d'épaissir efficacement une peinture mate sans solvant, quel que soit le gradient de cisaillement. A bas gradient de cisaillement (viscosité Brookfield™ à 10 tours / minute) on est même systématiquement plus efficace qu'avec l'art antérieur.

## Revendications

1. Polyuréthanes hydrosolubles résultant de la condensation :
a) de cardanol oxyalkylé et d'un polyalkylène glycol,
b) et d'au moins un polyisocyanate.

2. Polyuréthanes selon la revendication 1 qui résultent de la condensation de, exprimé en % en poids de chacun des monomères, la somme de ces % étant égale à 100 % ;
a) de 90 % à 99,5 % de cardanol, oxyalkylé et d'un polyalkylène glycol,
b) et de 0,5 % à 10 % d'au moins un polyisocyanate.

3. Polyuréthanes selon l'une des revendications 1 ou 2, **caractérisés en ce que** le polylakylène glycol est préférentiellement le polyéthylène glycol, préférentiellement un polyéthylène glycol de masse moléculaire en poids comprise entre 2 000 g/mole et 20 000 g/mole, préférentiellement entre 8 000 g/mole et 15 000 g/mole, et très préférentiellement entre 8 000 g/mole et 12 000 g/mole.

4. Polyuréthanes selon l'une des revendications 1 à 3, **caractérisés en ce que** le polyisocyanate est choisi parmi le 1,4-butane di-isocyanate, le 1,6-hexane diisocyanate, l'isophorone diisocyanate, le 1,3- et le 1,4- cyclohexane diisocyanate, le 4,4'diisocyanatodicyclohexylmethane, le 1-méthyl-2,4-diisocyanatocyclohexane et son mélange avec le 1-méthyl-2,6-diisocyanatocyclohexane, le biuret de l'hexaméthylène diisocyanate, le trimère de l'hexaméthylène diisocyanate, le trimère de l'isophorone diisocyanate et leurs mélanges.

5. Polyuréthanes selon l'une des revendications 1 à 4, **caractérisés en ce que** le cardanol oxyalkylé est oxyéthylé avec un nombre de motifs d'oxyde d'éthylène compris entre 1 et 100, préférentiellement entre 5 et 60.

6. Utilisation des polyuréthanes selon l'une des revendications 1 à 5, comme agents épaississants dans une composition aqueuse, ladite composition étant préférentiellement choisie parmi une peinture aqueuse, une laque, un vernis, une sauce de couchage papetière, une formulation cosmétique ou détergente.

## Patentansprüche

1. Wasserlösliche Polyurethane, die durch Kondensation der folgenden Stoffe erhalten werden:
a) alkoxylierten Cardanols und eines Polyalkylenglykols,
b) und mindestens eines Polyisocyanats.

2. Polyurethane nach Anspruch 1, die durch Kondensation der folgenden Stoffe erhalten werden, ausgedrückt in Gew.-% der jeweiligen Monomere, wobei die Summe dieser %-Werte gleich 100 % ist:
a) 90 % bis 99,5% an alkoxyliertem Cardanol und eines Polyalkylenglykols,
b) und 0,5% bis 10 % mindestens eines Polyisocyanats.

3. Polyurethane nach einem der Ansprüche 1 oder 2, **dadurch gekennzeichnet, dass** es sich bei dem Polyalkylenglykol vorzugsweise um Polyethylenglykol handelt, vorzugsweise um ein Polyethylenglykol mit einem gewichtsmäßigen Molekulargewicht im Bereich von 2.000 g/mol bis 20.000 g/mol, vorzugsweise von 8.000 g/mol bis 15.000 g/mol, und mit starkem Vorzug von 8.000 g/mol bis 12.000 g/mol.

4. Polyurethane nach einem der Ansprüche 1 bis 3, **dadurch gekennzeichnet, dass** das Polyisocyanat aus 1,4-Butandiisocyanat, 1,6-Hexandiisocyanat, Isophorondiisocyanat, 1,3- und 1,4-Cyclohexandiisocyanat, 4,4'-Diisocyanatodicyclohexylmethan, 1-Methyl-2,4-diisocyanatocyclohexan und dessen Mischung mit 1-Methyl-2,6-diisocyanatocyclohexan, Hexamethylendiisocyanat-Biuret, dem Trimer von Hexamethylendiisocyanat, dem Trimer von Isophorondiisocyanat und deren Mischungen ausgewählt ist.

5. Polyurethane nach einem der Ansprüche 1 bis 4, **dadurch gekennzeichnet, dass** der alkoxylierte Cardanol mit einer Anzahl von Ethylenoxid-Einheiten ethoxyliert ist, die im Bereich von 1 bis 100, vorzugsweise von 5 bis 60, liegt.

6. Verwendung der Polyurethane nach einem der Ansprüche 1 bis 5 als Verdickungsmittel in einer wässrigen Zusammensetzung, wobei die Zusammensetzung vorzugsweise aus einem wasserbasierten Anstrichmittel, einem Farblack, einem Klarlack, einer Papierstreichmasse, einer kosmetischen oder reinigenden Formulierung ausgewählt ist.

## Claims

1. Water-soluble polyurethanes resulting from the condensation:
a) of oxyalkylated cardanol and of a polyalkylene glycol,
b) and at least one polyisocyanate.

2. Polyurethanes according to claim 1 which result from the condensation of, expressed as a % by weight of each of the monomers, the sum of these %s being equal to 100%:
a) 90% to 99.5% of oxyalkylated cardanol and of a polyalkylene glycol,
b) and 0.5% to 10% of at least one polyisocyanate.

3. Polyurethanes according to one of the claims 1 or 2, **characterized in that** the polyalkylene glycol is preferentially polyethylene glycol, preferentially a polyethylene glycol of molecular mass by weight between 2,000 g/mol and 20,000 g/mol, preferentially between 8,000 g/mol and 15,000 g/mol, and very preferentially between 8,000 g/mol and 12,000 g/mol.

4. Polyurethanes according to one of the claims 1 to 3, **characterized in that** the polyisocyanate is chosen from among 1,4-butane di-isocyanate, 1,6-hexane diisocyanate, isophorone diisocyanate, 1,3- and 1,4- cyclohexane diisocyanate, 4,4'diisocyanatodicyclohexylmethane, 1-methyl-2,4-diisocyanatocyclohexane and its mixture with 1-methyl-2,6-diisocyanatocyclohexane, the biuret of hexamethylene diisocyanate, the trimer of hexamethylene diisocyanate, and the trimer of isophorone diisocyanate and mixtures thereof.

5. Polyurethanes according to one of the claims 1 to 4, **characterized in that** the oxyalkylated cardanol is oxyethylated with a number of ethylene oxide units between 1 and 100, preferentially between 5 and 60.

6. Use of polyurethanes according to one of the claims 1 to 5, as thickening agents in an aqueous composition, said composition being preferentially chosen from among an aqueous paint, a lacquer, a varnish, a paper coating color, a cosmetic formulation, or a detergent formulation.
